# EUROPEAN PATENT SPECIFICATION

(11) **EP 3 928 740 B1**
(45) Date of publication and mention of the grant of the patent: **29.05.2024**
(21) Application number: 19916521.8
(22) Date of filing: 26.04.2019
(51) Int. Cl.: A61C 17/06

(54) **ORAL TREATMENT GUIDE PLATE**
ORALE BEHANDLUNGSFÜHRUNGSPLATTE
PLAQUE DE GUIDAGE DE TRAITEMENT BUCCAL

(30) Priority: 19.02.2019 CN 201920213173 U
(43) Date of publication of application: 29.12.2021
(73) Proprietor: Beijing Yakebot Technology Co., Ltd, Beijing 100744 (CN)
(72) Inventor: WANG, Lifeng, Beijing 100007 (CN)
(74) Representative: Raffay & Fleck
(86) International application number: PCT/CN2019/084456
(87) International publication number: WO 2020/168633

(56) References cited:
- EP-A1- 2 842 516
- EP-A1- 3 326 663
- CN-A- 107 440 808
- CN-U- 204 951 757
- CN-Y- 201 022 696
- CN-Y- 201 275 154
- US-A- 5 460 524
- US-A1- 2012 021 375

## Description

### CROSS-REFERENCE TO RELATED APPLICATION

The present application claims priority to Chinese patent application No. 201920213173X filed on February 19, 2019, entitled "Oral Treatment Guide Plate".

### FIELD OF TECHNOLOGY

The present application relates to the technical field of oral treatment equipment, and in particular to an oral treatment guide plate.

### BACKGROUND

With the promotion of oral treatment technology and the improvement of people's requirements for oral health, more and more patients choose to implant and restore missing teeth or have root canal treatment for affected teeth. Oral treatment surgery is a precise operation performed in a small space. During dental implants or root canal treatment, the position and angle of surgical instruments are key goals for the success of the operation, and the oral treatment guide plate technology is a powerful tool to achieve this goal. The oral treatment guide plate may assist a dentist in performing the surgical procedure precisely according to the predetermined surgical position. When the oral treatment guide plate is used, it is necessary to use therewith a suction device and a saliva suction tube to suck away blood, saliva or washing fluid in the patient's oral cavity in time to prevent them from entering the esophagus or respiratory tract, causing patient discomfort, and at the same time to make the operation field of view clear and reduce pollution.

At present, the traditional saliva suction tube is generally a disposable long straw made by plastic. When in use, the suction device is connected to the saliva suction tube by a hose, and then the saliva suction tube is inserted into the patient's oral cavity to manually suck fluid in the tongue and buccal areas separately. Therefore, it is impossible for a dentist to perform oral treatment operation and saliva suction operation simultaneously, and the assistance of other medical staff is often required, which not only wastes human resources, but also takes up surgical operation space in the oral cavity. In addition, due to the presence of fluid in the tongue and buccal areas, it is inconvenient to switch back and forth between the tongue and buccal areas when sucking saliva. Moreover, when using a saliva suction tube, the suction tip sticks to the mucosal flap for a long time, resulting in tissue edema.

EP 3326663 A1 discloses an oral treatment guide plate; and CN 204951757 U discloses a maintenance device for post-oral cyst fenestration.

### BRIEF SUMMARY

Embodiments of the present application provide an oral treatment guide plate as claimed in claim 1, so as to solve the problems of single function, inconvenience in saliva suction and poor suction effect of the existing oral treatment guide plates.

An embodiment of the present application provides an oral treatment guide plate, including a guide plate body, a saliva suction main tube and a plurality of saliva suction branch tubes; a notch is formed on the guide plate body, and the saliva suction branch tubes are arranged on both sides of the notch; outlets of the plurality of saliva suction branch tubes are connected to an inlet of the saliva suction main tube, and an outlet of the saliva suction main tube is configured to connect with a suction device; the saliva suction branch tubes comprise a lingual saliva suction tube and a buccal saliva suction tube, the lingual saliva suction tube is adhered to a side surface of the guide plate body toward the tongue, and the buccal saliva suction tube is adhered to a side surface of the guide plate body toward the buccal mucosa; the lingual saliva suction tube is provided with a plurality of first suction holes on a side toward the tongue, and the buccal saliva suction tube is provided with a plurality of second suction holes on a side toward the buccal mucosa; the saliva suction branch tube is a flat-shaped tube attached to a surface of the guide plate body.

Preferably, the first suction holes are discretely distributed on the lingual saliva suction tube, and the second suction holes are discretely distributed on the buccal saliva suction tube.

Preferably, the outlet of the saliva suction main tube is provided with a tapered tube joint.

Preferably, the guide plate body, the saliva suction main tube and the saliva suction branch tubes are all integrally connected.

The oral treatment guide plate according to the embodiments of the present application includes a guide plate body, a saliva suction main tube and a plurality of saliva suction branch tubes. Through the notch formed on the guide plate body, the position and angle of the surgical instruments for oral treatment may be determined and guided, and both the convenience and accuracy of the operation may be improved; through the saliva suction tubes arranged on both sides of the notch, the fluid in the patient's oral cavity may be sucked in time during the operation. The outlets of the plurality of saliva suction branch tubes are all connected to the inlet of the saliva suction main tube, and the outlet of the saliva suction main tube is configured to connect with a suction device. The suction device is used to form a negative pressure in the lumina of the saliva suction main tube and the saliva suction branch tubes, so that the fluid in the patient's oral cavity enters the saliva suction branch tubes from the inlets of the saliva suction branch tubes, and then enters the saliva suction main tube from the outlets of the saliva suction branch tubes, and then the fluid through multi-path is merged and discharged out of the oral cavity. Saliva, blood and cleaning fluid produced during the operation may be discharged in time by providing saliva suction branch tubes on both sides of the notch, which improves the effect and efficiency of saliva suction and prevents pollution caused by fluid entering the treatment site. Moreover, the saliva suction branch tubes do not occupy the surgical operation space, avoiding the impact on the operation field of view. The oral treatment guide plate has functions of both guiding an oral treatment and sucking saliva, facilitating a dentist to complete oral treatment surgery independently, thereby saving labor and time.

### BRIEF DESCRIPTION OF THE DRAWINGS

In order to illustrate the technical solutions in the embodiments of the present application or the prior art more clearly, drawings needed to be used in the description of the embodiments or the prior art will be briefly introduced below. Obviously, the drawings in the following description show some embodiments of the present application. For those of ordinary skill in the art, other drawings may be obtained based on these drawings without creative work.

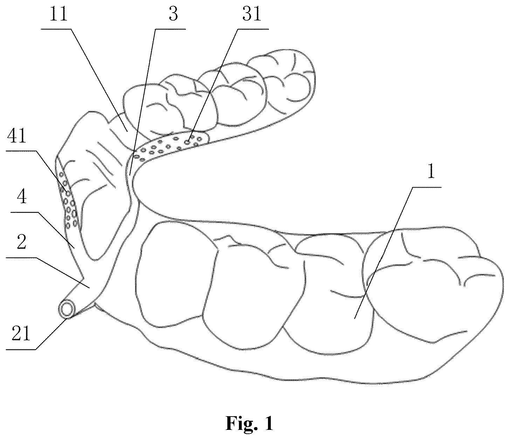

FIG. 1 is a schematic structural diagram of an oral treatment guide plate according to an embodiment of the present application.

### Reference numerals:

| | | | |
|---|---|---|---|
| 1 | guide plate body | 11 | notch |
| 2 | saliva suction main tube | 21 | tube joint |
| 3 | lingual saliva suction tube | 31 | first suction hole |
| 4 | buccal saliva suction tube | 41 | second suction hole |

### DETAILED DESCRIPTION

In order to illustrate the objectives, technical solutions and advantages of the embodiments of the present application more clearly, the technical solutions in the embodiments of the present application will be described clearly and completely in conjunction with the accompanying drawings in the embodiments of the present application. Obviously, the described embodiments are part of the embodiments of the present application, rather than all of the embodiments. All other embodiments obtained by a person of ordinary skill in the art based on the embodiments of the present application without any creative effort fall within the protection scope of the present application.

In the description of the embodiments of the present application, it should be noted that, unless otherwise expressly specified and defined, the terms "first" and "second" are used to clearly indicate the numbering of product components, and do not represent any substantial difference. "Left", "right", "inner" and "outer" are subject to the directions shown in the drawings. For those of ordinary skill in the art, the specific meanings of the above-mentioned terms in the embodiments of the present application can be understood according to specific circumstances.

It should be noted that, unless otherwise expressly specified and defined, the term "connect" should be understood in a broad sense, for example, it may be directly connected or indirectly connected through an intermediary. For those of ordinary skill in the art, the specific meaning of the term in the embodiments of the present application can be understood under specific circumstances.

FIG. 1 is a schematic structural diagram of an oral treatment guide plate according to an embodiment of the present application. As shown in FIG. 1, an oral treatment guide plate according to the embodiment of the present application includes a guide plate body 1, a saliva suction main tube 2 and a plurality of saliva suction branch tubes. The guide plate body 1 is made of resin material, and may be placed in the oral cavity. Specifically, the guide plate may be divided into three types according to the support form of the guide plate body 1: a tooth-supported guide plate, a mucosa-supported guide plate, or a bone-supported guide plate. Wherein the guide plate body 1 of the tooth-supported guide plate is directly fixed on a tooth adjacent to the missing (or affected) tooth area, which is suitable for patients with a single or a few missing or affected teeth. The guide plate body 1 of the mucosa-supported guide plate is directly fixed on the mucosa of an alveolar ridge crest in the missing (or affected) tooth area, which is suitable for patients with continuous multiple missing or affected teeth. The guide plate body 1 of the bone-supported guide plate is directly fixed on the bone surface of the jaw bone in the missing (or affected) tooth area, which is suitable for patients with multiple missing or affected teeth or bone defects. In the embodiments, the tooth-supported guide plate is mainly used as an example for description, guide plate bodies 1 of other types of guide plates are similar to that of the tooth-supported guide plate, and thus will not be repeated here.

A notch 11 is formed on the guide plate body 1 corresponding to the missing (or affected) tooth area of the patient. The notch 11 may be provided with an aperture or fitted with a sleeve to facilitate determining and guiding the position and angle of the surgical instrument. Oral surgery applicable to the oral treatment guide plate includes dental implant surgery, root canal treatment surgery, tooth extraction surgery, and other treatment operations that require saliva suction.

Both sides of the notch 11, namely the lingual side and the buccal side, are provided with saliva suction branch tubes. Each saliva suction branch tube has a hollow interior for liquid flow-through. The saliva suction branch tube includes an inlet and an outlet, wherein the inlet of the saliva suction branch tube is configured to suck fluid in the patient's oral cavity, and the outlets of the plurality of saliva suction branch tubes are all connected to the inlet of the saliva suction main tube 2. The outlet of the saliva suction main tube 2 is configured to connect with a suction device (not shown in the figure). The suction device may adopt a suction pump to generate negative pressure. The respective streams of fluid in the plurality of saliva suction tubes converge in the saliva suction main tube 2, and are uniformly discharged from the oral cavity through the outlet of the saliva suction main tube 2.

The oral treatment guide plate according to this embodiment includes a guide plate body, a saliva suction main tube and a plurality of saliva suction branch tubes. Through the notch formed on the guide plate body, the position and angle of the surgical instruments for oral treatment may be determined and guided, and both the convenience and accuracy of the operation may be improved; through the saliva suction branch tubes arranged on both sides of the notch, the fluid in the patient's oral cavity may be sucked in time during the operation. The outlets of the plurality of saliva suction branch tubes are all connected to the inlet of the saliva suction main tube, and the outlet of the saliva suction main tube is configured to connect with a suction device. The suction device is used to create negative pressure in the lumina of the saliva suction main tube and the saliva suction branch tubes, so that the fluid in the patient's oral cavity enters the saliva suction branch tubes from the inlets thereof, and then enters the saliva suction main tube from the outlets of the saliva suction branch tubes, and then the fluid through multi-path is merged and discharged out of the oral cavity. Saliva, blood and cleaning fluid produced during the operation may be discharged in time by providing saliva suction branch tubes on both sides of the notch, which improves the effect and efficiency of saliva suction and prevents pollution caused by fluid entering the treatment site. Moreover, the saliva suction branch tubes do not occupy the surgical operation space, avoiding the impact on the operation field of view. The oral treatment guide plate has functions of both guiding an oral treatment and sucking saliva, facilitating a dentist to complete oral treatment surgery independently, thereby saving labor and time.

Further, as shown in FIG. 1, the saliva suction branch tubes include a lingual saliva suction tube 3 and a buccal saliva suction tube 4. The lingual saliva suction tube 3 is adhered to an inner side of the guide plate body 1, namely a side surface of the guide plate body 1 toward the tongue. The buccal saliva suction tube 4 is adhered to an outer side of the guide plate body 1, namely a side surface of the guide plate body 1 toward the buccal mucosa. The size of the saliva suction structure is simplified by arranging the saliva suction branch tubes on the surface of the guide plate body and distributing the saliva suction branch tubes along the treatment site of missing or affected teeth.

When the number of notches 11 is one, namely a single missing (or affected) tooth is present in the patient's oral cavity, or multiple consecutive missing (or affected) teeth that form a missing (or affected) teeth area are present in the oral cavity, and when the notch 11 is located on the right or left side of the guide plate body 1, one lingual saliva suction tube 3 and one buccal saliva suction tube 4 are provided.

When the number of notches 11 is two or more, namely multiple missing (or affected) teeth are present in the oral cavity of the patient to form multiple missing (or affected) teeth areas, and when the multiple notches 11 are all located on the right or left side of the guide plate body 1, one lingual saliva suction tube 3 and one buccal saliva suction tube 4 are provided. Wherein the lingual saliva suction tube 3 and the buccal saliva suction tube 4 both extend along the surface of the guide plate body 1 to the most distal notch 11, and corresponding to each notch 11, an inlet configured to suck fluid is provided.

When the number of notches 11 is two or more, and some of the multiple notches 11 are located on the right side of the guide plate body 1, and the others are located on the left side of the guide plate body 1, two lingual saliva suction tubes 3 and two buccal saliva suction tubes 4 are provided, that is, one lingual saliva suction tube 3 and one buccal saliva suction tube 4 are provided on the left side of the guide plate body 1, while one lingual saliva suction tube 3 and one buccal saliva suction tube 4 are also provided on the right side of the guide plate body 1.

Still further, the lingual saliva suction tube 3 is provided with a plurality of first suction holes 31 on a side toward the tongue, and the buccal saliva suction tube 4 is provided with a plurality of second suction holes 41 on a side toward the buccal mucosa. The effect and efficiency of saliva suction are improved by providing the plurality of first suction holes 31 toward the lingual side and the plurality of second suction holes 41 toward the buccal side.

Still further, the first suction holes 31 are discretely distributed on the lingual saliva suction tube 3, and the second suction holes 41 are discretely distributed on the buccal saliva suction tube 4. Through the discretely distributed first suction holes and second suction holes, the problem of tissue edema caused by the existing saliva suction tube being adsorbed on the gum mucosa for a long time is avoided.

Further, as shown in FIG. 1, the outlet of the saliva suction main tube 2 is provided with a tapered tube joint 21 which is configured to connect with a suction device. Using the taper of the tube joint 21, it is more convenient for the outlet hose of the suction device to be inserted on the tube joint 21.

Further, the saliva suction branch tube is a flat-shaped tube attached to a surface of the guide plate body 1. The flat-shaped saliva suction branch tube can better adhere to the surface of the guide plate body 1, so that the overall streamline of the oral treatment guide plate is ensured and the patient's foreign body sensation is reduced.

Further, the guide plate body 1, the saliva suction main tube 2 and the saliva suction branch tubes are all integrally connected. Specifically, the guide plate body 1, the saliva suction main tube 2, and the saliva suction branch tubes may be integrally printed and formed by 3D printing. Integration of the saliva suction structure on the guide plate body 1 makes the saliva suction process more efficient and safe, and the surgical operation space more compact to broaden the operation field of view.

Still further, manufacturing methods of the oral treatment guide plate include a model method and a computer aided design/computer aided manufacture method (CAD/CAM method). Wherein, the model method refers to a method of making an oral treatment guide plate on a model after obtaining the physical model of the patient's oral cavity by modeling; the CAD/CAM method refers to a method of designing on a three-dimensional reconstruction virtual model based on the patient's CT data and processing the oral treatment guide plate through a computer aided production technology. In this embodiment, the CAD/CAM method is taken as an example for illustration. A three-dimensional model is generated in the computer aided design software based on the CT data of the patient's oral cavity, and then the structure of the saliva suction main tube 2 and the saliva suction branch tubes are designed on the surface of the model, and finally an oral treatment guide plate with a saliva suction structure is made by 3D printing.

The following will be specifically described in conjunction with the method of using the oral treatment guide plate in this embodiment.

When performing an oral treatment operation, the guide plate body 1 was first fixed onto the patient's tooth surface, and the surgical instrument was operated at the notch 11. During the operation, blood was produced at the notch 11, and saliva was secreted in the patient's oral cavity at the same time. Then, the negative pressure suction device was turned on, and negative pressure was formed in the lumina of the saliva suction main tube 2, the lingual saliva suction tube 3, and the buccal saliva suction tube 4. The lingual fluid in the oral cavity of the patient entered the saliva suction main tube 2 via the lingual saliva suction tube 3 through the first suction holes 31, the buccal fluid in the patient's oral cavity entered the saliva suction main tube 2 via the buccal saliva suction tube 4 through the second suction holes 41, and the saliva suction main tube 2 discharged the merged fluid out of the oral cavity via the tube joint 21.

It can be seen from the above-mentioned embodiments that the oral treatment guide plate according to the present application includes a guide plate body, a saliva suction main tube and a plurality of saliva suction branch tubes. Through the notch formed on the guide plate body, the position and angle of the surgical instruments for oral treatment may be determined and guided, and both the convenience and accuracy of the operation can be improved; through the saliva suction branch tubes arranged on both sides of the notch, the fluid in the patient's oral cavity may be sucked in time during the operation. The outlets of the plurality of saliva suction branch tubes are all connected to the inlet of the saliva suction main tube, and the outlet of the saliva suction main tube is configured to connect with a suction device. The suction device is used to generate negative pressure in the lumina of the saliva suction main tube and the saliva suction branch tubes, so that the fluid in the patient's oral cavity enters the saliva suction branch tubes from the inlets thereof, and then enters the saliva suction main tube from the outlets of the saliva suction branch tubes, and then the fluids through multi-path is merged and discharged out of the oral cavity. Saliva, blood and cleaning fluid produced during the operation may be discharged in time by providing saliva suction branch tubes on both sides of the notch, which improves the effect and efficiency of saliva suction and prevents pollution caused by fluid entering the treatment site. Moreover, the saliva suction branch tubes do not occupy the surgical operation space, avoiding the impact on the operation field of view. The oral treatment guide plate has functions of both guiding an oral treatment and sucking saliva, facilitating a dentist to complete oral treatment surgery independently, thereby saving labor and time.

Finally, it should be noted that the embodiments above are only for illustrating the technical solutions of the present application, rather than limiting them; although the present application has been described in detail with reference to the foregoing embodiments, those skilled in the art should understand that the technical solutions documented in the preceding embodiments may still be modified within the scope of the appended claims.

## Claims

1. An oral treatment guide plate, comprising a guide plate body (1), a saliva suction main tube (2) and a plurality of saliva suction branch tubes (3, 4); a notch (11) formed on the guide plate body (1), wherein the saliva suction branch tubes (3, 4) are arranged on both sides of the notch (11); wherein outlets of the plurality of saliva suction branch tubes (3, 4) are connected to an inlet of the saliva suction main tube (2), and an outlet of the saliva suction main tube (2) is configured to connect with a suction device **characterized in that** the saliva suction branch tubes (3, 4) comprise a lingual saliva suction tube (3) and a buccal saliva suction tube (4), wherein the lingual saliva suction tube (3) is adhered to a side surface of the guide plate (1) body toward the tongue, and the buccal saliva suction tube (4) is adhered to a side surface of the guide plate body (1) toward the buccal mucosa **characterised in that**, the lingual saliva suction tube (3) is provided with a plurality of first suction holes (31) on a side toward the tongue, and the buccal saliva suction tube (4) is provided with a plurality of second suction holes (41) on a side toward the buccal mucosa and wherein the saliva suction branch tube (3,4) is a flat-shaped tube attached to a surface of the guide plate body (1).

2. The oral treatment guide plate of claim 1, wherein the first suction holes (31) are discretely distributed on the lingual saliva suction tube (3), and the second suction holes (41) are discretely distributed on the buccal saliva suction tube (4).

3. The oral treatment guide plate of claim 1, wherein the outlet of the saliva suction main (2) tube is provided with a tapered tube joint (2).

4. The oral treatment guide plate of any one of claims 1 to 3, wherein the guide plate body (1), the saliva suction main tube (2) and the saliva suction branch tubes (3, 4) are all integrally connected.

## Patentansprüche

1. Orale Behandlungsführungsplatte, umfassend einen Führungsplattenkörper (1), eine Speichelabsaugungshauptröhre (2) und eine Vielzahl von Speichelabsaugungsabzweigungsröhren (3, 4); eine Kerbe (11), ausgebildet an dem Führungsplattenkörper (1), wobei die Speichelabsaugungsabzweigungsröhren (3, 4) auf beiden Seiten der Kerbe (11) angeordnet sind; wobei Auslässe der Vielzahl von Speichelabsaugungsabzweigungsröhren (3, 4) mit einem Einlass der Speichelabsaugungshauptröhre (2) verbunden sind und ein Auslass der Speichelabsaugungshauptröhre (2) dazu ausgebildet ist, sich mit einer Saugvorrichtung zu verbinden, **dadurch gekennzeichnet, dass** die Speichelabsaugungsabzweigungsröhren (3, 4) eine linguale Speichelabsaugungsröhre (3) und eine bukkale Speichelabsaugungsröhre (4) umfassen, wobei die linguale Speichelabsaugungsröhre (3) an einer Seitenfläche des Führungsplattenkörpers (1) in Richtung der Zunge anhaftet und die bukkale Speichelabsaugungsröhre (4) an einer Seitenfläche des Führungsplattenkörpers (1) in Richtung der Wangenschleimhaut anhaftet, **dadurch gekennzeichnet, dass** die linguale Speichelabsaugungsröhre (3) mit einer Vielzahl von ersten Sauglöchern (31) auf einer Seite in Richtung der Zunge versehen ist und die bukkale Speichelabsaugungsröhre (4) mit einer Vielzahl von zweiten Sauglöchern (41) auf einer Seite in Richtung der Wangenschleimhaut versehen ist, und wobei Speichelabsaugungsabzweigungsröhre (3, 4) eine flache Röhre, angebracht an einer Oberfläche des Führungsplattenkörpers (1), ist.

2. Orale Behandlungsführungsplatte nach Anspruch 1, wobei die ersten Sauglöcher (31) einzeln an der lingualen Speichelabsaugungsröhre (3) verteilt sind, und die zweiten Sauglöcher (41) einzeln an der bukkalen Speichelabsaugungsröhre (4) verteilt sind.

3. Orale Behandlungsführungsplatte nach Anspruch 1, wobei der Auslass der Speichelabsaugungshauptröhre (2) mit einer verjüngten Röhrenverbindung (2) versehen ist.

4. Orale Behandlungsführungsplatte nach einem der Ansprüche 1 bis 3, wobei der Führungsplattenkörper (1), die Speichelabsaugungshauptröhre (2) und die Speichelabsaugungsabzweigungsröhren (3, 4) alle einstückig verbunden sind.

## Revendications

1. Plaque de guidage de traitement buccal, comprenant un corps de plaque de guidage (1), un tube principal d'aspiration de salive (2) et une pluralité de tubes secondaires d'aspiration de salive (3, 4) ;
une encoche (11) formée sur le corps de plaque de guidage (1), dans laquelle les tubes secondaires d'aspiration de salive (3, 4) sont disposés de part et d'autre de l'encoche (11) ;
dans laquelle les sorties de la pluralité de tubes de dérivation d'aspiration de salive (3, 4) sont reliées à une entrée du tube principal d'aspiration de salive (2), et une sortie du tube principal d'aspiration de salive (2) est configurée pour se connecter à un dispositif d'aspiration,
**caractérisée en ce que** les tubes de dérivation d'aspiration de salive (3, 4) comprennent un tube d'aspiration de salive linguale (3) et un tube d'aspiration de salive buccale (4),
dans laquelle le tube d'aspiration de salive linguale (3) est collé à une surface latérale du corps de la plaque de guidage (1) vers la langue, et le tube d'aspiration de salive buccale (4) est collé à une surface latérale du corps de la plaque de guidage (1) vers la muqueuse buccale,
**caractérisée en ce que** le tube d'aspiration de salive linguale (3) est pourvu d'une pluralité de premiers trous d'aspiration (31) sur un côté vers la langue, et le tube d'aspiration de salive buccale (4) est pourvu d'une pluralité de seconds trous d'aspiration (41) sur un côté vers la muqueuse buccale et dans lequel le tube de branche d'aspiration de salive (3,4) est un tube de forme plate fixé à une surface du corps de la plaque de guidage (1).

2. Plaque de guidage de traitement buccal selon la revendication 1,
dans laquelle les premiers trous d'aspiration (31) sont discrètement répartis sur le tube d'aspiration de salive linguale (3), et les seconds trous d'aspiration (41) sont discrètement répartis sur le tube d'aspiration de salive buccale (4)

3. Plaque de guidage de traitement buccal selon la revendication 1,
dans laquelle la sortie du tube principal d'aspiration de salive (2) est pourvue d'un joint de tube conique (2).

4. Plaque de guidage de traitement buccal selon l'une des revendications 1 à 3, dans laquelle le corps de la plaque de guidage (1), le tube principal d'aspiration de salive (2) et les tubes de dérivation d'aspiration de salive (3, 4) sont tous intégralement reliés.
